# EUROPÄISCHE PATENTSCHRIFT

(11) **EP 3 827 244 B1**
(45) Veröffentlichungstag und Bekanntmachung des Hinweises auf die Patenterteilung: **12.07.2023**
(21) Anmeldenummer: 19726639.8
(22) Anmeldetag: 22.05.2019
(51) Int. Cl.: G01N 15/06

(54) **ANORDNUNG EINES STEUERGERÄTS UND EINES RUSSPARTIKELSENSORS UND VERFAHREN ZUM BETREIBEN DER ANORDNUNG**
ASSEMBLY OF A CONTROL UNIT AND OF A SOOT PARTICLE SENSOR AND METHOD FOR OPERATING THE ASSEMBLY
AGENCEMENT D'UN APPAREIL DE COMMANDE ET D'UN CAPTEUR DE PARTICULES DE SUIE ET PROCÉDÉ DESTINÉ À FAIRE FONCTIONNER L'AGENCEMENT

(30) Priorität: 24.07.2018 DE 102018212268
(43) Veröffentlichungstag der Anmeldung: 02.06.2021
(73) Patentinhaber: Robert Bosch GmbH, 70442 Stuttgart (DE)
(72) Erfinder: KAMP, Bernhard, 71732 Tamm (DE); SCHOLL, Michael, 71522 Backnang (DE)
(86) Internationale Anmeldenummer: PCT/EP2019/063184
(87) Internationale Veröffentlichungsnummer: WO 2020/020512

(56) Entgegenhaltungen:
- DE-A1-102013 216 899
- US-A1- 2011 015 824

## Beschreibung

### Stand der Technik

Die DE 10 2013 216 899 A1 der Anmelderin stellt den der Erfindung nächstliegenden Stand der Technik dar. Sie offenbart eine:
Anordnung aus einem Rußpartikelsensor und einem Steuergerät, wobei das Steuergerät eine Spannungsquelle und einen mit der Spannungsquelle elektrisch leitend verbundenen ersten Anschluss aufweist, an den der Rußpartikelsensor angeschlossen ist, und wobei das Steuergerät eine erste Strommesseinrichtung aufweist, die eine erste Stromstärke eines über den Anschluss durch den Rußpartikelsensor fließenden ersten Stroms misst, wohin das Steuergerät eine zweite Strommesseinrichtung und einen zwischen der Spannungsquelle und der ersten Strommesseinrichtung liegenden Schaltungsknoten aufweist, an dem sich ein fließender Strom der Spannungsquelle in einen ersten Strom und einen zweiten Strom aufteilt, wobei der erste Strom in einen zur ersten Strommesseinrichtung führenden Strompfad fließt und der zweite Strom in einen zur zweiten Strommesseinrichtung fließenden Strompfad fließt, und dass das Steuergerät dazu eingerichtet ist, zu bestimmen, wenn eine Stromstärke des mit der zweiten Strommesseinrichtung messbaren zweiten Stroms einen vorgegebenen Schwellenwert unterschreitet.

### Offenbarung der Erfindung

Die Erfindung betrifft in ihren Vorrichtungsaspekten eine Anordnung aus einem Rußpartikelsensor und einem Steuergerät und in ihren Verfahrensaspekten ein Verfahren zum Betreiben einer solchen Anordnung. Eine solche Anordnung und ein solches Verfahren werden jeweils als per se bekannt vorausgesetzt. Ein in Verbindung mit der Erfindung verwendbarer Rußpartikelsensor ist zum Beispiel aus der DE 10 2006 042 362 A2 bekannt. Rußpartikelsensoren werden zum Beispiel zur Überwachung der Funktionsfähigkeit von Partikelfiltern im Abgas von Verbrennungsmotoren eingesetzt.

Bei der per se bekannten Anordnung weist das Steuergerät eine Spannungsquelle und einen mit der Spannungsquelle elektrisch leitend verbundenen Anschluss auf, an den der Rußpartikelsensor angeschlossen ist. Weiter weist das Steuergerät eine erste Strommesseinrichtung auf, die eine erste Stromstärke eines über den Anschluss durch den Rußpartikelsensor fließenden ersten Stroms misst. Entsprechend weist das bekannte Verfahren einen Schritt auf, in dem eine erste Stromstärke eines über den Anschluss durch den Rußpartikelsensor fließenden ersten Stroms mit der ersten Strommesseinrichtung des Steuergeräts gemessen wird.

Der Messstromkreis wird innerhalb des Rußpartikelsensors über eine bei Anwesenheit von Ruß entstehende elektrisch leitfähige Rußschicht geschlossen, die zwei Elektroden des Rußpartikelsensors elektrisch leitfähig verbindet. Die Stromstärke des Messstroms variiert mit der Stärke der Rußschicht und stellt damit eine Messgröße dar, in der sich eine Rußkonzentration des Messgases abbildet, dem der Rußpartikelsensor ausgesetzt ist. Der elektrische Widerstand der Rußschicht liegt typischerweise im Bereich von 10 Megaohm. Typische Messstromstärken liegen im Bereich zwischen 0 und 50 Mikroampere.

Der in dem Messstromkreis fließende Strom ist dann besonders groß, wenn ein Kurzschluss auftritt. Der Strom kann aber auch dann besonders groß sein, wenn der Rußpartikelsensor mit Ruß überladen wird, da der Widerstand des abgelagerten Rußes invers zu der Dicke der Rußschicht variiert.

Um eine in der Regel reversible Rußüberladung von einem in der Regel irreversiblen Kurzschluss zu unterscheiden, ist es bekannt, den Sensor für etwa 100 Sekunden so stark aufzuheizen, dass eine ggf. vorhandene Rußschicht verbrennt. Dieser Vorgang wird auch als Plausibilisierungsregeneration bezeichnet. Wenn der Messstrom nach der Plausibilisierungsregeneration wieder unterhalb eines oberen Grenzwertes und damit in einem für einen fehlerfreien Zustand charakteristischen Wertebereich liegt, führt dies zu einer Fehlermeldung, die einen defekten Partikelfilter anzeigt. Der Rußpartikelsensor ist üblicherweise in einem Abgas als Messgas stromabwärts von einem Partikelfilter angeordnet.

Bei funktionsfähigem Partikelfilter sollte eine Rußüberladung des Partikelfilters nicht auftreten. Wird die Rußüberladung dennoch festgestellt, wird dies als Fehler des Partikelfilters gewertet. Die Plausibilisierungsregeneration kann eine Erkennung eines defekten Partikelfilters verzögern. Andererseits darf ein Partikelfilter auch nicht zeitlich vor einer möglichen Defektmeldung als noch ausreichend funktionsfähig beurteilt werden. Als Folge muss bei einer vorgeschriebenen Partikelfilterdiagnose, bei der das Signal des Rußpartikelsensors berücksichtigt wird, ggf. das Ende der Plausibilisierungsregeneration abgewartet werden, was unerwünscht ist.

Von diesem Stand der Technik unterscheidet sich die vorliegende Erfîndung. Die vorliegende Erfindung ist in ihren Vorrichtungsaspekten durch Anspruch 1 und in ihren Verfahrensaspekten durch Anspruch 6 definiert.

Danach definiert die erfindungsgemäße Vorrichtung, dass das Steuergerät einen zwischen der Spannungsquelle und der ersten Strommesseinrichtung liegenden Vorwiderstand, eine zweite Strommesseinrichtung und einen zwischen dem Vorwiderstand und der ersten Strommesseinrichtung liegenden Schaltungsknoten aufweist, an dem sich ein über den Vorwiderstand fließender Strom der Spannungsquelle in einen ersten Strom und einen zweiten Strom aufteilt, wobei der erste Strom in einen zur ersten Strommesseinrichtung führenden Strompfad fließt und der zweite Strom in einen zur zweiten Strommesseinrichtung fließenden Strompfad fließt, und dass das Steuergerät dazu eingerichtet ist, eine Fehlermeldung zu erzeugen, wenn der mit der zweiten Strommesseinrichtung messbare zweite Strom einen vorgegebenen Schwellenwert unterschreitet.

Entsprechend definiert das erfindungsgemäße Verfahren dass ein mit einer zweiten Strommesseinrichtung messbarer Strom erfasst und mit einem unteren Schwellenwert verglichen wird und dass eine Fehlermeldung erzeugt wird, wenn die zweite Stromstärke den ersten unteren Schwellenwert unterschreitet, wobei ein über den Vorwiderstand fließender Strom der Spannungsquelle an einem Schaltungsknoten, der zwischen einem zwischen der Spannungsquelle und der ersten Strommesseinrichtung liegenden Vorwiderstand und der ersten Strommesseinrichtung liegt, in einen ersten Strom und einen zweiten Strom aufgeteilt wird, wobei der erste Strom in einen zur ersten Strommesseinrichtung führenden Strompfad fließt und der zweite Strom in einem zur zweiten Strommesseinrichtung fließenden Strompfad fließt.

Die Erfindung besitzt den großen Vorteil, eine Diagnose des Rußpartikelsensors ohne Plausibilitätsregeneration zu ermöglichen. Eine Entscheidung, ob eine Messbereichsüberschreitung der ersten Strommesseinrichtung durch eine Rußüberladung des Rußpartikelsensors oder durch einen Kurzschluss einer positiven Rußpartikelsensorelektrodenzuleitung zur Bordnetzspannung oder zur Bordnetzmasse handelt, ist sofort möglich. Dies führt zu einer erwünschten Verkürzung der Messzeit und zu einer Verringerung der Komplexität der Diagnosesoftware und zu einer Verringerung des Absicherungsaufwandes. Es kann auch eine höhere Akzeptanz der Zulassungsbehörden erwartet werden, da elektrische Fehler innerhalb von 10 Sekunden nach dem Einschalten (power up) erkannt sein sollen und die Erfindung durch den möglichen Verzicht auf die ca. 100 s beanspruchende Plausibilisierungsregeneration zu einer Annäherung an dieses Ziel führt.

Die Erfindung zeichnet sich ferner auch dadurch aus, dass die erste Strommesseinrichtung zwischen den Schaltungsknoten und den ersten Anschluss geschaltet ist.

Eine weitere bevorzugte Ausgestaltung der Vorrichtung zeichnet sich dadurch aus, dass die erste Strommesseinrichtung einen Messverstärker aufweist

Weiter ist bevorzugt, dass die Spannungsquelle eine Konstantspannungsquelle ist.

Eine weitere bevorzugte Ausgestaltung der Vorrichtung zeichnet sich dadurch aus, dass die Spannungsquelle einen DC/DC-Aufwärtswandler aufweist, der eine Eingangsgleichspannung in eine Ausgangsgleichspannung wandelt, die größer als die Eingangsgleichspannung ist.

Bevorzugt ist auch, dass die zweite Strommesseinrichtung einen an den Schaltungsknoten angeschlossenen Spannungsteiler aufweist und dazu eingerichtet ist, eine an einem Mittelabgriff des Spannungsteilers herrschende Spannung zu messen.

Mit Blick auf die Verfahrensaspekte der Erfindung ist bevorzugt, dass die erste Stromstärke als Maß für eine Rußpartikelkonzentration in einer Messumgebung des Rußpartikelsensors ausgewertet wird.

Weiter ist bevorzugt, dass ein die Auswertung der ersten Stromstärke und den Vergleich der zweiten Stromstärke mit dem zweiten unteren Schwellenwert enthaltender Verfahrensablauf wiederholt erfolgt und dass die Auswertung und der Vergleich jeweils in demselben Verfahrensdurchlauf erfolgt.

Eine weitere bevorzugte Ausgestaltung zeichnet sich dadurch aus, dass bei einer Anordnung des Rußpartikelsensors in einem Messgasstrom stromabwärts von einem den Messgasstrom filternden Partikelfilter, die zweite Stromstärke mit einem zweiten unteren Schwellenwert verglichen wird, der größer als der erste untere Schwellenwert ist und dass der Partikelfilter als fehlerhaft beurteilt wird, wenn der zweite Schwellenwert länger als eine vorbestimmte Zeitdauer unterschritten wird und der erste Schwellenwert nicht unterschritten wird. Weitere Vorteile ergeben sich aus der nachfolgenden Beschreibung, den Zeichnungen und den Unteransprüchen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, der durch die beigefügten Ansprüche definiert ist.

Ausführungsbeispiele der Erfindung sind in den Zeichnungen dargestellt und werden in der nachfolgenden Beschreibung näher erläutert. Dabei zeigen, jeweils in schematischer Form:
- Figur 1: ein erstes Ausführungsbeispiel einer erfindungsgemäßen Anordnung;
- Figur 2: ein Flussdiagramm als Ausführungsbeispiel eines erfindungsgemäßen Verfahrens.

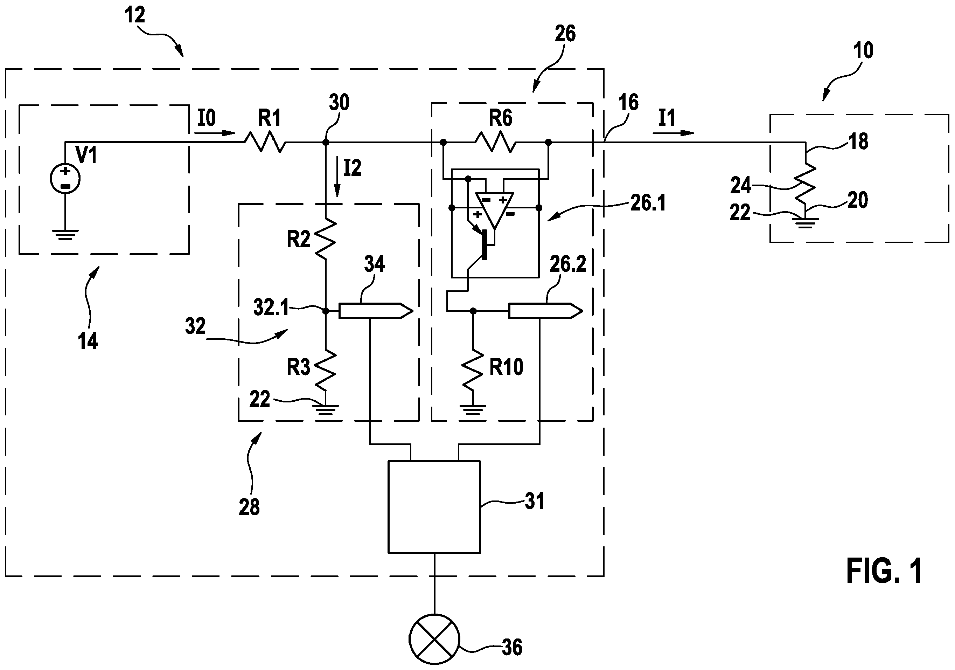

Im Einzelnen zeigt die Figur 1 eine Anordnung aus einem Rußpartikelsensor 10 und einem Steuergerät 12, wobei das Steuergerät 12 eine Spannungsquelle 14 und einen mit der Spannungsquelle 14 elektrisch leitend verbundenen ersten Anschluss 16 aufweist. Der Rußpartikelsensor 10 ist mit einer ersten Elektrode 18 an den ersten Anschluss 16 angeschlossen. Eine zweite Elektrode 20 des Rußpartikelsensors ist an eine elektrische Masse 22 angeschlossen. Die erste Elektrode 18 ist bei einem Betrieb des Rußpartikelsensors 10 in einem Rußpartikel tragenden Abgas durch eine Rußschicht elektrisch mit der zweiten Elektrode 20 verbunden. Die Rußschicht wird in der Figur 1 durch einen Widerstand 24 repräsentiert. Der Wert des Widerstandes der Rußschicht liegt im Megaohmbereich und bildet die Dicke der Rußschicht ab. Die Dicke der Rußschicht korreliert mit der Rußpartikelkonzentration im Messgas.

Die Spannungsquelle ist 14 ist bevorzugt eine Konstantspannungsquelle, insbesondere ein DC/DC-Aufwärtswandler, der eine Eingangsgleichspannung in eine höhere Ausgangsgleichspannung wandelt. Die Eingangsgleichspannung ist zum Beispiel eine Steuergerät-interne Gleichspannung oder eine Bordnetzspannung eines Kraftfahrzeuges, in dem die Erfindung eingesetzt wird.

Die Ausgangsgleichspannung liegt zum Beispiel bei 20 Volt bis 40 Volt. Das Steuergerät 12 weist eine erste Strommesseinrichtung 26 auf, die eine erste Stromstärke eines über den ersten Anschluss 16 durch den Rußpartikelsensor 10 fließenden ersten Stroms 11 präzise misst.

Das Steuergerät 12 weist einen elektrisch zwischen der Spannungsquelle 14 und der ersten Strommesseinrichtung 26 liegenden Vorwiderstand R1, eine zweite Strommesseinrichtung 28 und einen elektrisch zwischen dem Vorwiderstand R1 und der ersten Strommesseinrichtung 26 liegenden Schaltungsknoten 30 auf. Die erste Strommesseinrichtung 26 ist zwischen den Schaltungsknoten 30 und den ersten Anschluss 16 geschaltet. An dem Schaltungsknoten 30 teilt sich ein über den Vorwiderstand R1 fließender Strom 10 der Spannungsquelle 14 in einen ersten Strom 11 und einen zweiten Strom I2 auf. Der erste Strom 11 fließt in einem vom Schaltungsknoten 30 zur ersten Strommesseinrichtung 26 führenden Strompfad, und der zweite Strom I2 fließt in einem zur zweiten Strommesseinrichtung 28 fließenden Strompfad.

Die erste Strommesseinrichtung 26 weist einen Messwiderstand R6 und einen Messverstärker 26.1 auf, der eine über dem Messwiderstand R6 abfallende Spannung erfasst. Der Messwiderstand R6 liegt in dem vom Schaltungsknoten 30 zum ersten Anschluss 16 führenden Strompfad, über den der erste Strom 11 fließt. Der Messverstärker 26.1 weist einen Operationsverstärker auf, der einen verstärkten Messstrom ausgibt, der über einen Widerstand R10 nach Masse abfließt und dabei einen Spannungsabfall erzeugt. Dieser Spannungsabfall wird von einem ersten Analog-Digital-Wandler 26.2 erfasst und einem Mikroprozessor 31 des Steuergeräts 12 übergeben. Der gemessene Spannungsabfall wird von dem Mikroprozessor 31 als Maß für die Rußkonzentration im Messgas weiterverarbeitet und weiterverwendet.

Die zweite Strommesseinrichtung 28 weist einen mit einem ersten Ende an den Schaltungsknoten 30 angeschlossenen Spannungsteiler 32 aus Widerständen R2, R3 auf. Ein zweites Ende des Spannungsteilers ist an eine Masse 22 angeschlossen. Ein zweiter Analog-Digital-Wandler 34, der ein Bestandteil der zweiten Strommesseinrichtung 28 ist, ist an einen Mittelabgriff 32.1 des Spannungsteilers 32 angeschlossen. Die sich am Mittelabgriff 32.1 einstellende Spannung wird von dem zweiten Analog-Digital-Wandler 34 erfasst und dem Mikroprozessor 31 des Steuergeräts 12 übergeben. Diese Spannung ist ein Maß für die im Folgenden auch als zweite Stromstärke bezeichnete Stromstärke des zweiten Stroms I2. Das Steuergerät 12 ist durch eine entsprechende Programmierung dazu eingerichtet, eine zweite Stromstärke I2, die kleiner als ein vorgegebener Schwellenwert ist, als einen elektrischen Fehler zu bewerten.

In einem Ausführungsbeispiel, bei dem die Ausgangsspannung der Spannungsquelle 14 gleich 35 Volt ist, haben die Widerstände R1, R2, R3 zum Beispiel die folgenden Werte: R1 = 20 Kiloohm, R2 = 100 Kiloohm, R3 = 15 Kiloohm. R2 und R3 können aber zum Beispiel auch in der Kombination R2 = 1 Megaohm, R3 = 150 Kiloohm ausgeführt sein, oder in anderen Kombinationen in einem recht weiten Bereich. Wesentlich für die Wahl der Widerstandswerte ist, dass sich am Mittelabgriff 32.1 des Spannungsteilers 32 eine vom zweiten Analog-Digital-Wandler 34 digitalisierbare Spannung zwischen 0 V und 5 V einstellt.

Im fehlerfreien Normalbetrieb nimmt 11 typischerweise Werte von 0-50µA an, so dass im Messbetrieb in diesem Bereich kein nennenswerter Spannungsabfall an R1 abfällt. Erst bei höheren Strömen, speziell bei Kurzschlüssen kommt es zu einem sinnvoll auswertbaren Signal über dem Spannungsteiler 32, welches zu Diagnosezwecken verwendet werden kann.

Der Mikroprozessor 31 führt unter anderem einen Vergleich der mit der ersten Strommesseinrichtung 26 erfassten ersten Stromstärke 11 mit einem oberen Grenzwert durch. Oberhalb des oberen Grenzwertes für den Strom 11 liegende Messwerte können dann auftreten, wenn der über den ersten Anschluss 16 zu einer ersten Elektrode 18 des Rußpartikelsensors 10 führende und die erste Elektrode 18 noch einschließende Strompfad einen Kurzschluss nach Masse oder gegen die Bordnetzspannung aufweist. Die im fehlerfreien Zustand auf diesem Strompfad herrschende Spannung geht durch DC/DC-Aufwärtswandlung aus der Bordnetzspannung hervor und ist deshalb im fehlerfreien Zustand größer als die Bordnetzspannung.

Der Werte des Widerstandes 24 des Rußpartikelsensors 10 ist dann sehr groß, wenn ein Kurzschluss nicht vorliegt und die Rußbeladung des Rußpartikelsensors 10 eher klein ist. Im Extremfall ist der Wert des Widerstandes 24 unendlich groß. In diesem Fall wird die Stromstärke des von der Spannungsquelle 14 zum Schaltungsknoten 30 ausgehenden Stroms I0 und der Wert der sich am Schaltungsknoten 30 einstellenden Spannung durch die Werte der Widerstände R1, R2 und R3 festgelegt.

Wenn der Widerstand 24 mit zunehmender Rußbeladung kleiner wird, sinkt der Gesamtwiderstand der vom Schaltungsknoten 30 aus mit Strom versorgten Schaltungsteile ab. In der Figur 1 sind das alle rechts vom Schaltungsknoten 30 liegenden Schaltungsteile. Als Folge ergibt sich bei konstanter Spannung der Spannungsquelle 14 ein Anstieg des von der Spannungsquelle 14 über den Widerstand R1 zum Schaltungsknoten 30 fließenden Stroms I0. Damit fällt auch eine größere Spannung über R1 ab, was dazu führt, dass die am Schaltungsknoten 30 herrschende Spannung sinkt. Dann sinkt auch die Stromstärke des über den Spannungsteiler 32 fließenden Stroms I2 ab, so dass auch der zweite Analog-Digital-Wandler 34 der zweiten Strommesseinrichtung 28 eine kleinere Spannung misst als im Fall eines unendlich großen Widerstandes 24.

Dagegen nimmt die Stromstärke des ersten Stroms I1 mit abnehmendem Wert des Widerstandes 24 zu. Diese erste Stromstärke I1 wird von der ersten Strommesseinrichtung 26 erfasst und an den Mikroprozessor 31 übergeben. Je größer die Rußbeladung wird, desto größer wird auch die erste Stromstärke I1 werden. Bei einer bestimmten Größe der Rußbeladung wird der Operationsverstärker des Messverstärkers 26.1 in die Sättigung gehen, d.h. sein Ausgangssignal bleibt trotz weiter steigender Rußbeladung der Sensorelektroden konstant und bildet die weiter steigende Rußbeladung nicht mehr adäquat ab.

Der gleiche Effekt zeigt sich auch bei einem Kurzschluss der an den ersten Anschluss 16 des Steuergerätes 12 angeschlossenen Sensorzuleitung zu einer niedrigeren Spannung, bspw. zur Bordnetzspannung oder zu Masse. In Bezug auf die Stromstärke des in diesen beiden Fällen fließenden Stroms I1 unterscheiden sich Kurzschluss und Rußüberladung dadurch, dass die erste Stromstärke im Kurzschlussfall noch größer ist als im Fall der Rußüberladung, was aber im Signal der der ersten Strommesseinrichtung 26 nicht unterscheidbar ist.

In dieser Situation entfaltet die zweite Strommesseinrichtung 28 ihre Wirkung. Bei einer mittleren Stromstärke I1, wie sie bei einer Rußüberladung des Rußpartikelsensors 10 erwartbar ist, wird sich ein mittlerer Spannungsabfall über dem Widerstand R1 ergeben, was sich in einem mittleren Signal der zweiten Strommesseinrichtung 28 abbildet. Ein Kurzschluss führt dagegen zu einer größeren Stromstärke 11 und damit zu einem niedrigeren Potenzial am Schaltungsknoten 30 und einem entsprechend kleineren Potenzial am Mittelabgriff 32.1 zwischen den Widerständen R2 und R3 des Spannungsteilers 32 der zweiten Strommesseinrichtung 28. Das Potenzial am Mittelabgriff 32.1 zwischen diesen beiden Widerständen R2 und R3 wird von dem zweiten Analog-Digital-Wandler 34 als Messwert erfasst und an den Mikroprozessor 31 übergeben.

Der Mikroprozessor 31 ist durch eine entsprechende Programmierung des Steuergeräts 12 dazu eingerichtet, den Messwert mit einem vorgegebenen Schwellenwert zu vergleichen und eine Fehlermeldung auszugeben, wenn der Messwert kleiner als der Schwellenwert ist. Der Schwellenwert ist bevorzugt so vorbestimmt, dass er eine Unterscheidung elektrischer Fehler von Rußüberladungen des Rußpartikelsensors erlaubt. Die Fehlermeldung führt bevorzugt dazu, dass eine Fehlerlampe 36 eingeschaltet wird, die sich bei einer Verwendung der Anordnung in einem Kraftfahrzeug im Blickfeld des Fahrers oder Insassen befindet, Das Einschalten erfolgt bevorzugt erst nach statistischer Absicherung, d.h. nur dann, wenn der Fehler mit einer vorbestimmten Häufigkeit festgestellt worden ist. Alternativ oder ergänzend wird eine Fehlermeldung in einem Speicher des Steuergeräts 12 abgelegt, die einen elektrischen Fehler repräsentiert.

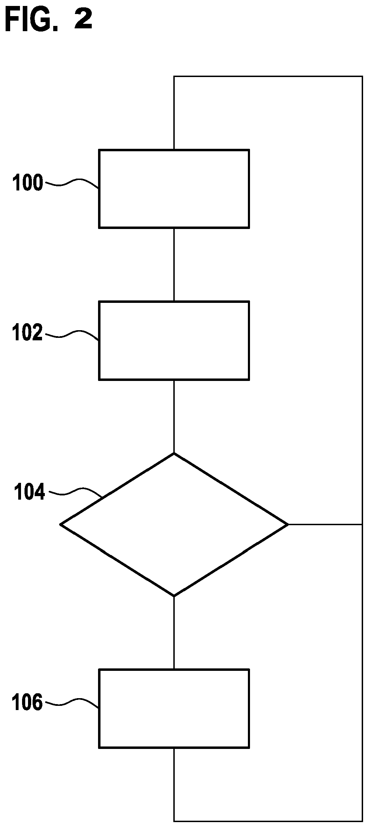

Figur 2 zeigt ein Flussdiagramm als Ausführungsbeispiel eines erfindungsgemäßen Verfahrens. Aus einem übergeordneten Hauptprogramm 100 zur Steuerung und Auswertung der Signale des Rußpartikelsensors 10 heraus, das im Steuergerät 12 abläuft, wird wiederholt ein Schritt 102 erreicht, in dem der Messwert der zweiten Strommesseinrichtung 28 eingelesen wird. Im anschließenden Schritt 104 wird der Messwert mit einem vorgegebenen Schwellenwert verglichen. Ist der Messwert nicht kleiner als der Schwellenwert, erfolgt eine Rückkehr in das Hauptprogramm 100. In dem Hauptprogramm erfolgt zum Beispiel eine Auswertung des Signals der ersten Strommesseinrichtung 26 und eine Zuweisung von Partikelkonzentrationen zu diesem Signal.

Ist der Messwert dagegen kleiner als der Schwellenwert, verzweigt das Programm in den Schritt 106, in dem dieser Sachverhalt als Fehler gewertet wird. Die Bewertung als Fehler kann in einem Erhöhen eines Fehlerzählers und einer Bestimmung der Häufigkeit des Auftretens des Fehlers einschließlich einer Abspeicherung der Häufigkeit und/oder einem Einschalten der Fehlerlampe beim Auftreten des Fehlers oder einer statistischen Absicherung des Auftretens des Fehlers erfolgen. Auch hier erfolgt anschließend eine Rückkehr in das Hauptprogramm.

## Patentansprüche

1. Anordnung aus einem Rußpartikelsensor (10) und einem Steuergerät (12), wobei das Steuergerät (12) eine Spannungsquelle (14) und einen mit der Spannungsquelle (14) elektrisch leitend verbundenen ersten Anschluss (16; 38) aufweist, an den der Rußpartikelsensor (10) angeschlossen ist, und wobei das Steuergerät (12) eine erste Strommesseinrichtung (26) aufweist, die eine erste Stromstärke eines über den Anschluss (26; 38) durch den Rußpartikelsensor (10) fließenden ersten Stroms (I1) misst, wobei das Steuergerät (12) einen zwischen der Spannungsquelle (14) und der ersten Strommesseinrichtung (26) liegenden Vorwiderstand (R1), eine zweite Strommesseinrichtung (28) und einen zwischen dem Vorwiderstand (R1) und der ersten Strommesseinrichtung (26) liegenden Schaltungsknoten (30) aufweist, an dem sich ein über den Vorwiderstand (R1) fließender Strom (I0) der Spannungsquelle (14) in einen ersten Strom (I1) und einen zweiten Strom (I2) aufteilt, wobei der erste Strom (I1) in einen zur ersten Strommesseinrichtung (26) führenden Strompfad fließt und der zweite Strom (I2) in einen zur zweiten Strommesseinrichtung (28) fließenden Strompfad fließt, wobei das Steuergerät (12) dazu eingerichtet ist, eine Fehlermeldung zu erzeugen, wenn eine Stromstärke des mit der zweiten Strommesseinrichtung (28) messbaren zweiten Stroms (I2) einen vorgegebenen Schwellenwert unterschreitet, und wobei die erste Strommesseinrichtung (26) zwischen den Schaltungsknoten (30) und den ersten Anschluss (16) geschaltet ist.

2. Anordnung nach Anspruch 1, **dadurch gekennzeichnet, dass** die erste Strommesseinrichtung (26) einen Messverstärker (26.1) aufweist.

3. Anordnung, nach einem der vorhergehenden Ansprüche, **dadurch gekennzeichnet, dass** die Spannungsquelle (14) eine Konstantspannungsquelle ist.

4. Anordnung nach einem der vorhergehenden Ansprüche, **dadurch gekennzeichnet, dass** die Spannungsquelle (14) einen Aufwärtswandler aufweist, der eine Eingangsgleichspannung in eine Ausgangsgleichspannung wandelt, die größer als die Eingangsgleichspannung ist.

5. Anordnung nach einem der vorhergehenden Ansprüche, **dadurch gekennzeichnet, dass** die zweite Strommesseinrichtung (28) einen an den Schaltungsknoten (30) angeschlossenen Spannungsteiler (32) aufweist und dazu eingerichtet ist, eine an einem Mittelabgriff (32.1) des Spannungsteilers (32) herrschende Spannung zu messen.

6. Verfahren zum Betreiben einer Anordnung aus einem Steuergerät (12) und einem Rußpartikelsensor (10), wobei das Steuergerät (12) eine Spannungsquelle (14) und einen mit der Spannungsquelle (14) elektrisch leitend verbundenen ersten Anschluss (16) aufweist, an den der Rußpartikelsensor (10) angeschlossen ist, und wobei eine erste Stromstärke (I1) eines über den ersten Anschluss (16) durch den Rußpartikelsensor (10) fließenden ersten Stroms (I1) mit einer ersten Strommesseinrichtung (26) des Steuergeräts (12) gemessen wird, wobei ein von der Spannungsquelle (14) erzeugter Strom (I0) über einen Vorwiderstand (R1) geführt und an einem stromabwärts des Vorwiderstands (R1) liegenden Schaltungsknoten (30) in den ersten Strom (I1) und einen zweiten Strom (I2) aufgeteilt wird, wobei eine Stromstärke des zweiten Stroms (I2) als zweite Stromstärke mit einer zweiten Strommesseinrichtung (28) gemessen wird und die zweite Stromstärke (I2) mit einem Schwellenwert verglichen wird und dass eine Fehlermeldung erzeugt wird, wenn die zweite Stromstärke (I2) den Schwellenwert unterschreitet und wobei die erste Strommesseinrichtung (26) zwischen den Schaltungsknoten (30) und den ersten Anschluss (16) geschaltet ist.

7. Verfahren nach Anspruch 6, **dadurch gekennzeichnet, dass** die erste Stromstärke (I1) als Maß für eine Rußpartikelkonzentration in einer Messumgebung des Rußpartikelsensors (10) ausgewertet wird.

## Claims

1. Arrangement composed of a soot particle sensor (10) and a control device (12), wherein the control device (12) has a voltage source (14) and a first connection (16; 38) which is electrically conductively connected to the voltage source (14) and to which the soot particle sensor (10) is connected, and wherein the control device (12) has a first current measuring device (26) which measures a first current intensity of a first current (I1) flowing through the soot particle sensor (10) via the connection (26; 38), wherein the control device (12) has a series resistor (R1) between the voltage source (14) and the first current measuring device (26), a second current measuring device (28) and a circuit node (30) between the series resistor (R1) and the first current measuring device (26), at which circuit node a current (I0) flowing from the voltage source (14) via the series resistor (R1) is divided into a first current (I1) and a second current (I2), wherein the first current (I1) flows into a current path leading to the first current measuring device (26) and the second current (I2) flows into a current path flowing to the second current measuring device (28), wherein the control device (12) is configured to generate an error message if a current intensity of the second current (I2), which is able to be measured by the second current measuring device (28), does not reach a predefined threshold value, and wherein the first current measuring device (26) is connected between the circuit node (30) and the first connection (16) .

2. Arrangement according to Claim 1, **characterized in that** the first current measuring device (26) has a measuring amplifier (26.1).

3. Arrangement according to either of the preceding claims, **characterized in that** the voltage source (14) is a constant voltage source.

4. Arrangement according to one of the preceding claims, **characterized in that** the voltage source (14) has a step-up converter which converts an input DC voltage into an output DC voltage that is greater than the input DC voltage.

5. Arrangement according to one of the preceding claims, **characterized in that** the second current measuring device (28) has a voltage divider (32) that is connected to the circuit node (30) and is configured to measure a voltage prevailing on a centre tap (32.1) of the voltage divider (32) .

6. Method for operating an arrangement composed of a control device (12) and a soot particle sensor (10), wherein the control device (12) has a voltage source (14) and a first connection (16) which is electrically conductively connected to the voltage source (14) and to which the soot particle sensor (10) is connected, and wherein a first current intensity (I1) of a first current (I1) flowing through the soot particle sensor (10) via the first connection (16) is measured by a first current measuring device (26) of the control device (12), wherein a current (I0) produced by the voltage source (14) is routed via a series resistor (R1) and is divided into the first current (I1) and a second current (I2) at a circuit node (30) downstream of the series resistor (R1), wherein a current intensity of the second current (I2) is measured as a second current intensity by a second current measuring device (28) and the second current intensity (I2) is compared with a threshold value, and in that an error message is generated if the second current intensity (I2) does not reach the threshold value, and wherein the first current measuring device (26) is connected between the circuit node (30) and the first connection (16).

7. Method according to Claim 6, **characterized in that** the first current intensity (I1) is evaluated as a measure of a soot particle concentration in a measuring environment of the soot particle sensor (10).

## Revendications

1. Arrangement composé d'un détecteur de particules de suie (10) et d'un contrôleur (12), le contrôleur (12) possédant une source de tension (14) et une première borne (16 ; 38), reliée de manière électriquement conductrice à la source de tension (14) et à laquelle est relié le détecteur de particules de suie (10), et le contrôleur (12) possédant un premier dispositif de mesure de courant (26), lequel mesure une première intensité de courant d'un premier courant (I1) qui circule par le biais de la borne (26 ; 38) à travers le détecteur de particules de suie (10), le contrôleur (12) possédant une première résistance série (R1) qui se trouve entre la source de tension (14) et le premier dispositif de mesure de courant (26), un deuxième dispositif de mesure de courant (28) et un noeud de circuit (30) qui se trouve entre la résistance série (R1) et le premier dispositif de mesure de courant (26), au niveau duquel un courant (I0) de la source de tension (14) qui circule par la résistance série (R1) se divise en un premier courant (I1) et un deuxième courant (I2), le premier courant (I1) circulant dans un trajet de courant qui mène au premier dispositif de mesure de courant (26) et le deuxième courant (I2) circulant dans un trajet de courant qui mène au deuxième dispositif de mesure de courant (28), le contrôleur (12) étant conçu pour générer un message d'erreur lorsqu'une intensité de courant du deuxième courant (I2) mesurable avec le deuxième dispositif de mesure de courant (28) devient inférieure à une valeur de seuil prédéfinie, et le premier dispositif de mesure de courant (26) étant branché entre le noeud de circuit (30) et la première borne (16).

2. Arrangement selon la revendication 1, **caractérisé en ce que** le premier dispositif de mesure de courant (26) possède un amplificateur de mesure (26.1).

3. Arrangement selon l'une des revendications précédentes, **caractérisé en ce que** la source de tension (14) est une source de tension constante.

4. Arrangement selon l'une des revendications précédentes, **caractérisé en ce que** la source de tension (14) possède un convertisseur élévateur qui convertit une tension continue d'entrée en une tension continue de sortie, laquelle est supérieure à la tension continue d'entrée.

5. Arrangement selon l'une des revendications précédentes, **caractérisé en ce que** le deuxième dispositif de mesure de courant (28) possède un diviseur de tension (32) raccordé au noeud de circuit (30) et est conçu pour mesurer une tension prévalente au niveau d'une prise médiane (32.1) du diviseur de tension (32).

6. Procédé pour faire fonctionner un arrangement composé d'un contrôleur (12) et d'un détecteur de particules de suie (10), le contrôleur (12) possédant une source de tension (14) et une première borne (16), reliée de manière électriquement conductrice à la source de tension (14) et à laquelle est relié le détecteur de particules de suie (10), et une première intensité de courant d'un premier courant (I1) qui circule par le biais de la première borne (16) à travers le détecteur de particules de suie (10) étant mesurée par un premier dispositif de mesure de courant (26) du contrôleur (12), un courant (I0) généré par la source de tension (14) étant acheminé par une résistance série (R1) et divisé en un premier courant (I1) et un deuxième courant (I2) au niveau d'un noeud de circuit (30) qui se trouve en aval la résistance série (R1), une intensité de courant du deuxième courant (I2) étant mesurée en tant que deuxième intensité avec un deuxième dispositif de mesure de courant (28) et la deuxième intensité de courant (I2) étant comparée à une valeur de seuil et en ce qu'un message d'erreur est généré lorsque la deuxième intensité de courant (I2) devient inférieure à la valeur de seuil, et le premier dispositif de mesure de courant (26) étant branché entre le noeud de circuit (30) et la première borne (16).

7. Procédé selon la revendication 6, **caractérisé en ce que** la première intensité de courant (I1) est interprétée comme une mesure pour une concentration de particules de suie dans un environnement de mesure du détecteur de particules de suie (10).
